**Europäisches Patentamt**

**European Patent Office**

**Office européen des brevets**

(19)

(11) Veröffentlichungsnummer : **0 127 695**
**B1**

(12) **EUROPÄISCHE PATENTSCHRIFT**

(45) Veröffentlichungstag der Patentschrift :
03.12.86

(51) Int. Cl.⁴ : **F 16 J 15/34**

(21) Anmeldenummer : **83105527.2**

(22) Anmeldetag : **04.06.83**

(54) Dichtungsanordnung für Gleiskettenglieder eines Gleiskettenlaufwerkes.

(43) Veröffentlichungstag der Anmeldung :
**12.12.84 Patentblatt 84/50**

(45) Bekanntmachung des Hinweises auf die Patenterteilung : **03.12.86 Patentblatt 86/49**

(84) Benannte Vertragsstaaten :
**DE FR GB IT SE**

(56) Entgegenhaltungen :
**AU-B- 472 071**
**DD-A- 77 628**
**GB-A- 956 237**
**US-A- 3 614 113**

(73) Patentinhaber : **DEERE & COMPANY**
**1 John Deere Road**
**Moline Illinois 61265 (US)**

(72) Erfinder : **Pröbsting, Bernhard**
**Paracelsusstrasse 5**
**D-6660 Zweibrücken (DE)**

(74) Vertreter : **Sartorius, Peter et al**
**DEERE & COMPANY European Office, Patent Department Postfach 503 Steubenstrasse 36-42**
**D-6800 Mannheim 1 (DE)**

## Beschreibung

Die Erfindung bezieht sich auf eine Dichtungsanordnung für Gleiskettenglieder eines Kettenlaufwerkes von Raupenfahrzeugen mit zwei ringförmigen Dichtkörpern, die an ihrer Vorderseite gegeneinander anliegende Dichtflächen aufweisen und zwischen Stirnflächen einer aus einem Kettenglied, einer Buchse und einem Gelenkbolzen gebildeten Dichtkammer eingeklemmt sind, wobei die Rückseite eines jeden Dichtkörpers gegen je einen elastomeren Ringkörper ganzflächig, dichtend abstützbar ist.

Es ist bereits eine Radaufhängung für Fahrzeuge, insbesondere Laufrollenaufhängung für Gleiskettenfahrzeuge, bekannt (DE-A 1 961 008), die einen Radführungslenker aufweist, der unter der Wirkung einer Haupttragfeder abgefedert ist und unter dem Einfluß eines Reibungsdämpfers steht. Der Reibungsdämpfer besteht aus zahlreichen gegeneinander anliegenden Reiblamellen, welche abwechselnd mit einer Verzahnung einer Kupplungshülse in Eingriff stehen. Die einzelnen Reiblamellen sind dem Druck einer Federgruppe ausgesetzt, welche aus gegeneinandergestellten Tellerfedern besteht. Die Tellerfedern sind zwischen einer Gegendruckplatte und der Rückwand eines Deckels angeordnet, die gegen die Reiblamellen anliegt. Derartige Tellerfedern sind alleine nicht in der Lage, ausreichend abzudichten, da in die V-förmige Aussparung zwischen zwei Tellerfedern Schmutz ohne weiteres eindringen kann. Bei einer Verstellung des Schwenkarmes der Laufrollenaufhängung führen die außen- sowie die innenliegenden Anlageflächen der Tellerfedern gegeneinander eine Relativbewegung aus, so daß das Eindringen des Schmutzes in den keilförmigen Spalt, der durch zwei nebeneinander liegende Tellerfedern gebildet wird, begünstigt wird.

Bei einer bekannten Dichtungsanordnung für Gleiskettenglieder der eingangs aufgeführten Art (DE-B 1 114 104) soll der Zutritt von Wasser oder Schmutz zum Kettenbolzen dadurch verhindert werden, daß in einer Dichtkammer der Gleiskettenglieder gummierte Stahlscheiben vorgesehen sind, deren beide Rückseiten zwischen den Stirnflächen der Dichtkammer eingeklemmt sind. Im Bereich des Außenumfangs der Dichtkörper ist ein ringförmiger Spalt vorgesehen, der ein Eindringen des Schmutzes bzw. des Schmutzwassers erleichtert.

Demgemäß besteht die Erfindungsaufgabe darin, die einzelnen Dichtflächen der Dichtkörper der Gleiskettenglieder derart auszubilden und zu plazieren, daß ein Eindringen von Schmutz bzw. Schmutzwasser in die Dichtkammer der Gleiskettenglieder verhindert wird. Diese Aufgabe wird dadurch gelöst, daß die Dichtkörper tellerfederartig ausgebildet sind und ihre gegeneinander anliegenden Dichtflächen im Bereich des Außenumfangs der Dichtkörper vorgesehen sind und sich bis an die jeweilige außenliegende Stirnkante der Dichtkörper erstrecken. Durch die vorteilhafte Ausbildung und Anordnung der gegeneinander anliegenden Dichtkörper wird verhindert, daß Schmutz bzw. Schmutzwasser in die Dichtkammer der Gleiskettenglieder eindringt, da Vertiefungen bzw. keilförmige Einschnitte im Außenbereich der Dichtflächen nicht gebildet werden. Durch die vorteilhafte Anordnung der tellerfederartig ausgebildeten Dichtkörper ist der zwischen den Dichtkörpern gebildete V-förmige Zwischenraum mit Bezug auf die Dichtkammer bzw. den Gelenkbolzen nach innen verlegt worden, ohne daß dabei die Anpresskraft im Bereich der Dichtfläche der Dichtkörper beeinträchtigt worden ist.

Da die an der Vorderseite des Dichtkörpers vorgesehene Dichtfläche eine Eindringhärte aufweist, die größer ist als die Eindringhärte der übrigen Bestandteile des Dichtkörpers, wird verhindert, daß auch bei großer Anpresskraft ein zu schneller Abrieb der einzelnen Dichtflächen erfolgt. Um eine große Anpreßkraft erzielen zu können, ist es vorteilhaft, daß die an der Vorderseite des Dichtkörpers vorgesehene Dichtfläche eine Ringfläche bildet, die kleiner ist als die übrige angrenzende Ringfläche des Dichtkörpers. Ferner ist es vorteilhaft, daß der Außendurchmesser der Dichtfläche größer ist als der Außendurchmesser des elastomeren Ringkörpers. Auf diese Weise kann ein Eindringen von Schmutz in die Dichtkammer verhindert werden. Ferner kann der Innendurchmesser der Dichtfläche kleiner sein als der Außendurchmesser des Ringkörpers.

In weiterer Ausgestaltung der Erfindung ist es vorteilhaft, daß die Dichtkörper als Stahlscheiben ausgebildet sind, deren Dichtflächen als geschliffene, plane bzw. gewölbte Oberflächen ausgebildet sind. Da der Dichtkörper als Stahlscheibe ausgebildet ist, dessen Dichtfläche besonders behandelt ist, wird verhindert, daß kleinste Schmutzpartikel zwischen die Dichtflächen der Dichtkörper gelangen. Durch die geschliffene Dichtfläche erhält man eine sehr gute Dichtwirkung bei sehr kleinem Verschleiß der Dichtflächen.

Vorteilhaft ist es außerdem, daß die außenliegenden Stirnkanten des Dichtkörpers mit Abstand zur Ringwand der Dichtkammer und die innenliegenden Stirnkanten des Dichtkörpers mit Abstand zur Außenoberfläche des Gelenkbolzens angeordnet sind. Vorteilhaft ist es außerdem, daß die beiden gegeneinander anliegenden Dichtkörper sich in Richtung des Gelenkbolzens V-förmig öffnen und auf ihrer Rückseite je einen anvulkanisierten, sich nach innen verjüngenden elastischen Körper tragen, der mit seiner sich radial erstreckenden Rückseite gegen die Stirnflächen des Kettengliedes bzw. der Buchse anliegt. Durch die Anvulkanisierung des keilförmigen Körpers, der auch als Gummikörper ausgebildet sein kann, wird verhindert, daß die Dichtkörper gegenüber den Gummikörpern eine Relativbewegung ausführen, die normalerweise ein Eindringen von Schmutzpartikeln zwischen Dichtkörper und Gummikörper begünstigen würden. Die radial verlaufende Rückseite des Gummikörpers kann ebenfalls mit der Stirnfläche der Dichtkammer fest verbunden werden, so daß auch zwischen diesen Flächen keine Relativbewegung stattfindet, sondern nur zwischen den Dichtflächen der tellerartig ausgebildeten Dichtkörper. Der durch die Dichtkörper gebildete Raum kann als Schmiermittelkammer dienen. Außerdem ist es vorteilhaft, daß mehrere paarweise zusammenwirkende Dichtkörper nebeneinander in einer Dichtkammer vorgesehen sind.

In der Zeichnung sind zwei Ausführungsbeispiele für Dichtungsanordnungen von Gleiskettengliedern nach der Erfindung schematisch dargestellt. Es zeigt :

Figur 1 eine Dichtungsanordnung für zwei über einen Gelenkbolzen miteinander verbundene Gleiskettenglieder im Schnitt,

Figur 2 ein weiteres Ausführungsbeispiel für eine Dichtungsanordnung,

Figur 3 eine Teilsansicht der gegeneinander anliegenden Dichtelemente gemäß Fig. 1.

In der Zeichnung ist mit 2 ein Ausschnitt einer linken Gleiskettengelenkverbindung für das Laufwerk eines Raupenfahrzeuges gezeigt, die einen Gelenkbolzen 4 aufweist, der in einer zylindrischen Bohrung 6 einer Buchse 8 drehbar aufgenommen ist. Der linke und rechte Teil des Gelenkbolzens 4 trägt im Bereich seiner Stirnfläche 10 ein außenliegendes Kettenglied 12, das mittels einer Presspassung auf dem Gelenkbolzen 4 drehfest angeordnet ist.

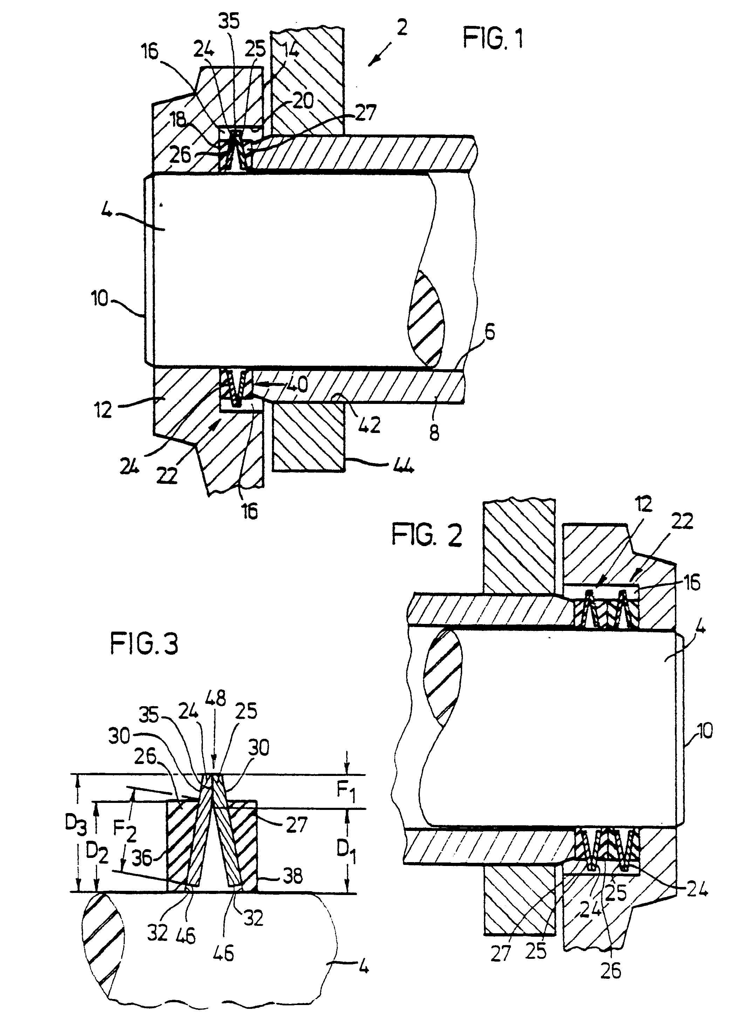

Das außenliegende Kettenglied 12 weist im Bereich seiner innenliegenden Stirnfläche 14 eine im Querschnitt rechteckförmige Dichtkammer 16 auf, die durch eine radial verlaufende Stirnfläche 18 und eine sich axial erstreckende Ringwand 20 gebildet wird. Die Dichtkammer 16 ist in Richtung der Stirnfläche 14 offen und dient zur Aufnahme einer Dichtungsanordnung 22, die aus zwei tellerfederartig ausgebildeten Dichtkörpern 24, 25 sowie zwei keilförmigen Ringkörpern 26, 27 gebildet ist. Die beiden Dichtkörper 24, 25 sind in Richtung des Gelenkbolzens 4 V-förmig offen und liegen mit ihrer Rückseite 30 gegen schräg verlaufende Stirnfläche 32 der Ringkörper 26, 27 an. Im Bereich des Außenumfanges der Dichtkörper 24, 25 weisen diese sich radial erstreckende, flache Dichtflächen 35 auf, die plan gegeneinander anliegen. Die Dichtflächen 35 können vorteilhafterweise gewölbt sein, so daß sie an irgendeiner Stelle ständig gegeneinander anliegen. Die Dichtfläche ist in Fig. 3 durch den Buchstaben $F_1$ bezeichnet. Wie aus Fig. 1 und 3 hervorgeht, ist die Dichtfläche 35 wesentlich geringer als die übrige innenliegende Ringfläche $F_2$ des Dichtkörpers 24, 25. Die linke sich radial erstreckende Stirnfläche 36 des Ringkörpers 26 liegt plan und dichtend gegen die Stirnfläche 18 der Dichtkammer 16 und die rechte sich radial erstreckende Stirnfläche 38 des rechten Ringkörpers 27 plan und dichtend gegen eine Stirnfläche 40 der Buchse 8 an.

Die Buchse 8 ist in einer Bohrung 42 eines innenliegenden bzw. nachfolgenden Kettengliedes 44 mittels einer Preßverbindung drehfest aufgenommen. Hierdurch dreht sich während des Arbeitseinsatzes des Kettenlaufwerkes das Kettenglied 44 gemeinsam mit der Buchse 8 auf dem Gelenkbolzen 4 gegenüber dem nachfolgenden Kettenglied 12, das mit dem Gelenkbolzen 4 fest verbunden ist. In Fig. 1 sind lediglich die beiden linken Kettenglieder 12, 44 teilweise dargestellt. Die beiden rechten Kettenglieder sind mit Bezug auf die Kettenglieder 12, 44 spiegelbildlich angeordnet (siehe Fig. 2).

Wie aus Fig. 3 hervorgeht, ist der Außendurchmesser $D_3$ der Dichtkörper 24, 25 etwas größer als der Außendurchmesser $D_2$ des Ringkörpers 26 bzw. 27. Die beiden innenliegenden Stirnkanten 46 der Dichtkörper 24, 25 sind mit Abstand zur Oberfläche des Gelenkbolzens 4 und die beiden außenliegenden Stirnkanten 48 sind mit Abstand zur Ringwand 20 angeordnet, um auf diese Weise einen Abrieb an der Ringwand 20 der Dichtkammer 16 und der Oberfläche des Gelenkbolzens 4 zu vermeiden.

Da die Dichtfläche 35 der beiden Dichtkörper 24, 25 im Bereich des Außenumfanges der beiden Dichtkörper vorgesehen ist, können spaltförmige Einbuchtungen bzw. Rillen im Bereich der Dichtflächen 35 vermieden werden, so daß ein Eindringen von Schmutzpartikeln in Richtung des Gelenkbolzens ausgeschaltet ist.

Beim Arbeitseinsatz wird lediglich der eine Dichtkörper 24 gegenüber dem anderen Dichtkörper 25 gedreht, so daß nur an einer Stelle des Dichtkörpers eine besonders bearbeitete Oberfläche erforderlich ist. Im Ausführungsbeispiel ist die Dichtfläche 35 besonders geschliffen und weist eine Eindringhärte auf, die wesentlich größer ist als die Eindringhärte der übrigen Teile der Dichtkörper 24, 25. Die einzelnen Dichtkörper 24, 25 können als Metallfedern ausgebildet sein.

In Fig. 2 ist anstelle der Dichtanordnung 22 gemäß Fig. 1, 3 ein weiteres Paar Dichtkörper 24, 25 mit den entsprechenden Ringkörpern 26, 27 neben dem ersten Paar Dichtkörper 24, 25 und den Ringkörpern 26, 27 vorgesehen, um somit die Abdichtkapazität weiterhin zu verbessern.

## Patentansprüche

1. Dichtungsanordnung für Gleiskettenglieder eines Kettenlaufwerkes von Raupenfahrzeugen mit zwei ringförmigen Dichtkörpern (24, 25), die an ihrer Vorderseite gegeneinander anliegende Dichtflächen (35) aufweisen und zwischen Stirnflächen einer aus einem Kettenglied (12), einer Buchse (8) und einem Gelenkbolzen (4) gebildeten Dichtkammer (16) eingeklemmt sind, wobei die Rückseite eines jeden Dichtkörpers gegen je einen elastomeren Ringkörper (26, 27) ganzflächig, dichtend abstützbar ist, dadurch gekennzeichnet, daß die Dichtkörper (24, 25) tellerfederartig ausgebildet sind und ihre gegeneinander anliegenden Dichtflächen (35) im Bereich des Außenumfangs der Dichtkörper vorgesehen sind und sich bis an die jeweilige außenliegende Stirnkante (48) der Dichtkörper (24, 25) erstrecken.

2. Dichtungsanordnung nach Anspruch 1, dadurch gekennzeichnet, daß die an der Vorderseite des Dichtkörpers (24, 25) vorgesehene Dichtfläche (35) eine Eindringhärte aufweist, die größer ist als die Eindringhärte der übrigen Bestandteile des Dichtkörpers.

3. Dichtungsanordnung nach Anspruch 1 und 2, dadurch gekennzeichnet, daß die an der Vorderseite des Dichtkörpers (24, 25) vorgesehene Dichtfläche (35) eine Ringfläche ($F_1$) bildet, die kleiner ist als die übrige angrenzende Ringfläche ($F_2$) des Dichtkörpers.

4. Dichtungsanordnung nach Anspruch 1 und 3, dadurch gekennzeichnet, daß der Außendurchmesser ($D_3$) der Dichtfläche (35) größer ist als der Außendurchmesser ($D_2$) des elastomeren Ringkörpers (26, 27).

5. Dichtungsanordnung nach Anspruch 4, dadurch gekennzeichnet, daß der Innendurchmesser ($D_1$) der Dichtfläche kleiner ist als der Außendurchmesser ($D_2$) des Ringkörpers.

6. Dichtungsanordnung nach Anspruch 1, dadurch gekennzeichnet, daß die Dichtkörper (24 bzw. 25) als Stahlscheiben ausgebildet sind, deren Dichtflächen (35) als geschliffene, plane bzw. gewölbte Oberflächen ausgebildet sind.

7. Dichtungsanordnung nach einem oder mehreren der vorherigen Ansprüche, dadurch gekennzeichnet, daß die außenliegenden Stirnkanten (48) des Dichtkörpers (24, 25) mit Abstand zur Ringwand (20) der Dichtkammer und die innenliegenden Stirnkanten (46) des Dichtkörpers mit Abstand zur Außenoberfläche des Gelenkbolzens (4) angeordnet sind.

8. Dichtungsanordnung nach einem oder mehreren der vorherigen Ansprüche, dadurch gekennzeichnet, daß die beiden gegeneinander anliegenden Dichtkörper (24, 25) sich in Richtung des Gelenkbolzens (4) V-förmig öffnen und auf ihrer Rückseite je einen anvulkanisierten, sich nach innen verjüngenden elastischen Körper tragen, der mit seiner sich radial erstreckenden Rückseite gegen die Stirnflächen des Kettengliedes (12) bzw. der Buchse (8) anliegt.

9. Dichtungsanordnung nach einem oder mehreren der vorherigen Ansprüche, dadurch gekennzeichnet, daß mehrere paarweise zusammenwirkende Dichtkörper (24, 25) nebeneinander in einer Dichtkammer (16) vorgesehen sind.

## Claims

1. Sealing arrangement for track chain links of a chain drive assembly of caterpillar vehicles, having two annular sealing bodies (24, 25) which have sealing surfaces (35) bearing against one another at their fronts and are clamped between end faces of a sealing chamber (16) formed from a chain link (12), a bushing (8) and an articulation pin (4), the back of each sealing body being supportable in sealing relationship against a respective elastomeric annular body (26, 27) over the entire area thereof, characterised in that the sealing bodies (24, 25) are formed after the fashion of cup springs and their sealing surfaces (35) bearing against one another are provided in the region of the outer circumference of the sealing bodies and extend as far as the respective outer end edges (48) of the sealing bodies (24, 25).

2. Sealing arrangement according to claim 1, characterised in that the sealing surface (35) provided at the front of the sealing body (24, 25) has a penetration hardness which is greater than the penetration hardness of the remaining parts of the sealing body.

3. Sealing arrangement according to claims 1 and 2, characterised in that the sealing surface (35) provided at the front of the sealing body (24, 25) forms an annular surface ($F_1$) which is smaller than the remaining adjoining annular surface ($F_2$) of the sealing body.

4. Sealing arrangement according to claims 1 and 3, characterised in that the outer diameter ($D_3$) of the sealing surface (35) is greater than the outer diameter ($D_2$) of the elastomeric annular body (26, 27).

5. Sealing arrangement according to claim 4, characterised in that the inner diameter ($D_1$) of the sealing surface is smaller than the outer diameter ($D_2$) of the annular body.

6. Sealing arrangement according to claim 1, characterised in that the sealing bodies (24 and 25) are in the form of steel discs whose sealing surfaces (35) are formed as ground plane or convex surfaces.

7. Sealing arrangement according to one or more of the preceding claims, characterised in that the outer end edges (48) of the sealing bodies (24, 25) are arranged at a distance from the annular wall (20) of the sealing chamber and the inner end edges (46) of the sealing bodies are arranged at a distance from the surface of the articulation pin (4).

8. Sealing arrangement according to one or more of the preceding claims, characterised in that the two sealing bodies (24, 25) bearing against one another open towards the articulation pin (4) in the form of a V and each bears on its back a vulcanized-on and inwardly tapering elastic body bearing at its radially extending back against the end face of the chain link (12) and of the bushing (8), respectively.

9. Sealing arrangement according to one or more of the preceding claims, characterised in that a plurality of sealing bodies (24, 25) cooperating in pairs is provided side by side in a sealing chamber (16).

## Revendications

1. Système d'étanchéité pour des éléments ou maillons d'un train de roulement à chenille de véhicules à chenilles, comportant deux éléments d'étanchéité annulaires (24, 25) qui présentent sur leur face antérieure des surfaces d'étanchéité (35) s'appliquant l'une contre l'autre et sont enserrés entre les surfaces frontales d'une chambre d'étanchéité (16) constituée par un maillon de chenille (12), une douille (8) et un axe d'articulation (4), la face postérieure de chaque élément d'étanchéité pouvant s'appuyer de façon étanche sur toute la surface contre un élément annulaire en élastomère respectif (26, 27), caractérisé en ce que les éléments d'étanchéité (24, 25) sont réalisés sous la forme de rondelles coniques (ressorts Belleville) et en ce que leurs surfaces d'étanchéité (35) s'appliquant l'une contre l'autre sont prévues au voisinage de la périphérie extérieure des éléments d'étanchéité et s'étendent jusqu'au bord frontal extérieur respectif (48) des éléments d'étanchéité (24, 25).

2. Système d'étanchéité selon la revendication 1, caractérisé en ce que la surface d'étanchéité (35) prévue sur la face antérieure de l'élément d'étanchéité (24, 25) présente une dureté à la pénétration supérieure à la dureté à la pénétration des autres constituants de l'élément d'étanchéité.

3. Système d'étanchéité selon les revendications 1 et 2, caractérisé en ce que la surface d'étanchéité (35) prévue sur la face antérieure de l'élément d'étanchéité (24, 25) forme une surface annulaire (F1) plus petite que le reste de la surface annulaire contiguë (F2) de l'élément d'étanchéité.

4. Système d'étanchéité selon les revendications 1 et 3, caractérisé en ce que le diamètre extérieur (D3) de la surface d'étanchéité (35) est supérieur au diamètre extérieur (D2) de l'élément annulaire en élastomère (26, 27).

5. Système d'étanchéité selon la revendication 4, caractérisé en ce que le diamètre intérieur (D1) de la surface d'étanchéité est inférieur au diamètre extérieur (D2) de l'élément annulaire.

6. Système d'étanchéité selon la revendication 1, caractérisé en ce que les éléments d'étanchéité (24 ou 25) sont réalisés sous la forme de rondelles d'acier dont les surfaces d'étanchéité (35) sont réalisées sous la forme de surfaces planes ou bombées rectifiées.

7. Système d'étanchéité selon une ou plusieurs des revendications précédentes, caractérisé en ce que les bords frontaux extérieurs (48) de l'élément d'étanchéité (24, 25) sont placés à distance de la paroi annulaire (20) de la chambre d'étanchéité, et en ce que les bords frontaux intérieurs (46) de l'élément d'étanchéité sont placés à distance de la surface extérieure de l'axe d'articulation (4).

8. Système d'étanchéité selon une ou plusieurs des revendications précédentes, caractérisé en ce que les deux éléments d'étanchéité (24, 25) s'appliquant l'un contre l'autre s'ouvrent en V en direction de l'axe d'articulation (4) et comportent chacun, sur leur face postérieure, un élément élastique fixé par vulcanisation, s'amincissant vers l'intérieur, qui est en contact, par sa face postérieure orientée radialement, avec les surfaces frontales du maillon (12), ou de la douille (8).

9. Système d'étanchéité selon une ou plusieurs des revendications précédentes, caractérisé en ce que plusieurs éléments d'étanchéité (24, 25) contigus coopérant deux à deux sont prévus dans une chambre d'étanchéité (16).

FIG. 1

FIG. 2

FIG. 3